(19) Europäisches Patentamt
European Patent Office
Office européen des brevets

(11) **EP 1 919 234 A2**

(12) **EUROPEAN PATENT APPLICATION**

(43) Date of publication:
**07.05.2008 Bulletin 2008/19**

(51) Int Cl.:
*H04Q 7/36* (2006.01)

(21) Application number: **07117581.4**

(22) Date of filing: **28.09.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(30) Priority: **02.11.2006 US 856040 P
22.12.2006 US 643810**

(71) Applicant: **FUJITSU LIMITED
Kawasaki-shi,
Kanagawa 211-8588 (JP)**

(72) Inventors:
• **Viorel, Dorin,
c/o FUJITSU LIMITED
Kawasaki-shi,
Kanagawa 211-8588 (JP)**
• **Cameron, Fraser,
c/o FUJITSU LIMITED
Kawasaki-shi,
Kanagawa 211-8588 (JP)**

(74) Representative: **Wilding, Frances Ward et al
Haseltine Lake
Lincoln House
300 High Holborn
London WC1V 7JH (GB)**

(54) **Determining transmitting stations in an OFDMA network**

(57)    Preamble modulation codes in an OFDMA network are assigned to one of at least two groups, one of the groups indicating that codes assigned to the group are for base stations in the network and a different one of the groups indicating that codes assigned to the group are for relay stations in the network. The relay station attempting to enter or re-enter the network receives a signal transmitted from a station in the network and determines whether the station that transmitted the received signal is a base station or a relay station based on the group to which the preamble modulation code of the received signal was assigned.

FIG. 1

**EP 1 919 234 A2**

**Description**

CROSS-REFERENCE TO RELATED APPLICATIONS

The present application claims priority to provisional application titled "Method for Optimizing the Network Entry and Handover Procedures of the Relay Stations Operating in OFDMA Networks", serial number 60/856,040, filed November 2, 2006, inventors Dorin Viorel and Fraser Cameron, attorney docket number 1974.1001 P, and which is incorporated herein by reference.

BACKGROUND OF THE INVENTION

Description of the Related Art

Wireless communication networks have become increasingly popular and generally include a base station that provides service to a cell area located around the base station. Mobile stations (such as cell phones, etc.) are able to communicate with the base station when they are within the service area of the base station. In certain types of wireless communication networks, such as, for example, those based on the Institute of Electrical and Electronics Engineers (IEEE) 802.16 standard, "last mile" connectivity of mobile stations within the network is the focus. In order for the mobile stations to identify the base station and attempt to register with the base station within a given service area, the base station will transmit a signal that includes a robust preamble. The preamble generally has a low sensitivity threshold and is not provided for transmitting data, but instead is used for identifying the base station, such that the base station can be synchronized with a mobile station seeking service within the cell area. The mobile station is provided with a preamble detector that receives the robust preamble from the base station and identifies the signal as being from a base station based on a cell ID that is modulated in the preamble.

However, in wireless communication, due to such effects as shadowing arising from blockage by buildings and other obstructions between transmission/reception antennas, there exist dead zones in which communication with the base station is not possible, despite being within the service area. To combat this problem, in an Orthogonal Frequency Division Multiple Access (OFDMA) network, relay stations could be employed for providing enhanced transmission capabilities by acting as intermediaries between mobile stations operating in a given cell of the network and the related servicing base station. In this manner, a mobile station that is incapable of connecting directly to a base station within its cell service area may still connect indirectly to the base station by first communicating with a relay station that does have a direct link to the base station.

Each relay station is also provided with a preamble detector that receives robust preambles from other base or relay stations within the network, allowing the relay station to identify the station transmitting the signal containing the preamble. However, a relay station attempting to execute a network entry or a hard handover procedure will generally use the same preamble signal detector algorithm as a standard compliant mobile station, therefore making it impossible for a relay station to differentiate between the base station and another relay station in the network.

As such, a relay station attempting to execute a network entry or a hard handover procedure may attempt to make a sub-optimal connection to another relay station in the network, instead of connecting directly to the base station that is within its range, as is desired. If this occurs, the relay station attempting to execute a network entry or a hard handover procedure will exchange data with the base station through a link between the other relay station and the base station, thereby degrading the bandwidth efficiency of the link between the other relay station and the base station and increasing the time required for connection, due to the supplementary data and control traffic requested by the relay station attempting to execute a network entry or a hard handover procedure and its assigned mobile stations. Furthermore, a relay station may not be able to provide the same range of services and capabilities of a base station.

The invention is defined in the independent claims, to which reference should now be made. Advantageous embodiments are set out in the sub claims.

Various embodiments of the present invention provide a method which includes (a) assigning preamble modulation codes employed in an Orthogonal Frequency Division Multiple Access (OFDMA) network to one of at least two groups, one of the groups indicating that codes assigned to the group are for base stations in the network and a different one of the groups indicating that codes assigned to the group are for relay stations in the network; (b) receiving a signal transmitted from a station in the network, the received signal including a preamble modulation code; and (c) determining whether the station that transmitted the received signal is a base station or a relay station based on the group to which the preamble modulation code of the received signal was assigned.

Various embodiments of the present invention provide a method which includes (a) detecting a preamble modulation code of a signal transmitted by a station in an Orthogonal Frequency Division Multiple Access (OFDMA) network; and (b) determining whether the station is a base station or a relay station based on a group to which the detected preamble modulation code is assigned.

Various embodiments of the present invention provide a relay station including (a) means for detecting a preamble modulation code of a signal transmitted by a station in an Orthogonal Frequency Division Multiple Access (OFDMA) network; and (b) means for determining whether the station is a base station or a relay station based on a group to which the detected preamble modulation code was assigned.

The above embodiments of the present invention are simply examples, and all embodiments of the present invention are not limited to these examples.

Additional advantages of the invention will be set forth in part in the description which follows, and, in part, will be obvious from the description, or may be learned by practice of the invention.

BRIEF DESCRIPTION OF THE DRAWINGS

These and other objects and advantages of the invention will become apparent and more readily appreciated from the following description of the preferred embodiments, taken in conjunction with the accompanying drawings of which:

Fig. 1 is an illustration of an example of an inter-cell topology involving two relay stations operating in an OFDMA network under the 802.16 standard.

Fig. 2 is a flowchart illustrating the method of a relay station attempting to execute a network entry or a hard handover procedure, according to an embodiment of the present invention.

Fig. 3 is a flowchart illustrating the method of a relay station attempting to execute a network entry or a hard handover procedure, according to an embodiment of the present invention.

Fig. 4 is an illustration of an example of a tier 1+2 wireless network topology for modeling the assignment of preamble modulation codes in an OFDMA network, according to an embodiment of the present invention.

Fig. 5 is chart illustrating the assignment of preamble modulation codes into a group indicating relation to a base station and a group indicating relation to a relay station, according to an embodiment of the present invention.

DETAILED DESCRIPTION OF THE PREFERRED EMBODIMENTS

Reference will now be made in detail to the present preferred embodiments of the present invention, examples of which are illustrated in the accompanying drawings, wherein like reference numerals refer to like elements throughout.

Various embodiments of the present invention provide a relay station attempting to execute a network entry or a hard handover procedure in an Orthogonal Frequency Division Multiple Access (OFDMA) network with a method of distinguishing between other relay stations and a base station by assigning preamble modulation codes employed in the OFDMA network to one of at least two groups. In this manner, a relay station attempting to execute a network entry or a hard handover procedure in an OFDMA network can distinguish between another relay station and the base station, thereby ensuring the maximum desired transmission capabilities of the network.

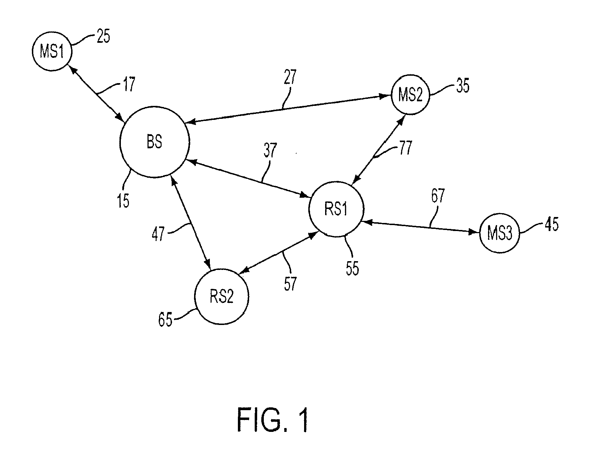

Fig. 1 is an illustrative example of an inter-cell topology involving two relay stations operating in an OFDMA network. The network cell includes a base station (BS) 15, a first relay station (RS1) 55, a second relay station (RS2) 65, a first mobile station (MS1) 25, a second mobile station (MS2) 35, and a third mobile station (MS3) 45. In this example, mobile station 25 is within range of base station 15, and, therefore, can communicate directly with base station 15 through the MS1-BS link 17. Mobile station 35 is within range of base station 15 and relay station 55 and, therefore, can communicate directly with base station 15 through the MS2-BS link 27, or, in the alternative, can communicate with base station 15 indirectly through relay station 55, preferably using the MS2-RS1 link 77 and the RS1-BS link 37, or, alternatively, using the MS2-RS1 link 77, the RS1-RS2 link 57, and the RS2-BS link 47. Mobile station 45 is out of range of base station 15 and, therefore, can only communicate with base station 15 indirectly through relay station 55, using MS3-RS1 link 67 and RS1-BS link 37. In this environment, relay station 65, using network compliant preamble detection circuitry, may detect a set of superimposed preamble signals.

Relay station 65, while attempting to execute a network entry or re-entry procedure, may attempt to execute a network entry or re-entry procedure (hard handover) with relay station 55, instead of base station 15, because the preamble detector of relay station 65 receives a preamble signal from relay station 55. As a result, bandwidth efficiency of RS1-BS link 37 is degraded, due to the supplementary data and control traffic requested by relay station 65. Also, relay station 55 may not be capable of providing relay station 65 with same range of services and capabilities as base station 15.

Various embodiments of the present invention propose a method to manage the OFDMA preamble modulation codes in such a way that a relay station, such as relay station 65, attempting to enter or re-enter the network (handover procedure) will be able to differentiate between a base station, such as base station 15, and another relay station entity, such as relay station 55, by reading the preamble modulation codes without the need to exchange any other control signaling with the network. Considering that the preamble modulation code is detected in the time domain, the detection and the connection decision should take no longer than two frames. Therefore, since this procedure does not require any supplementary exchange of control information, this procedure is the fastest possible, optimizing the network entry and thus improving the overall bandwidth efficiency for a relay station.

Fig. 1 is only an illustrative example of an inter-cell topology involving two relay stations operating in an OFDMA network. The various embodiments of the present invention are not limited to an OFDMA network including only a single base station, two relays stations, and three mobile stations as illustrated in Fig. 1, but may include any wireless communication network supporting any number of base stations, relay stations, and mobile stations.

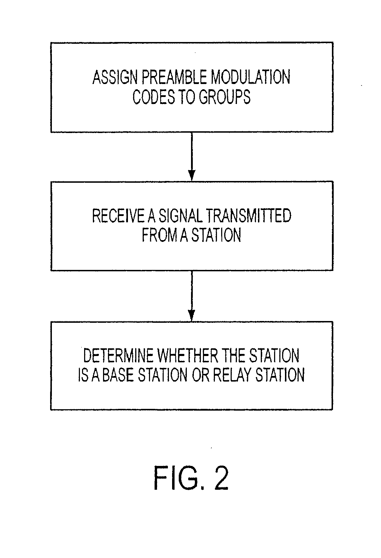

Fig. 2 is a flowchart illustrating a procedure of a relay station attempting to execute a network entry or a hard handover procedure, according to an embodiment of the present invention. Referring now to Fig. 1, in operation 10, preamble modulation codes in an OFDMA network are assigned to one of at least two groups, one of the groups indicating that codes assigned to the group are for base stations in the network and a different one of the groups indicating that codes assigned to the group are for relay stations in the network.

The OFDMA preamble modulation codes can be Pseudo Noise (PN) sequences and, for example, under the Institute of Electrical and Electronics Engineers (IEEE) 802.16 standard, base stations are designed to use 114 distinct preamble modulation codes, each preamble modulation code being a distinct PN sequence. Furthermore, these 114 PN sequences are represented by cell ID's, which are modulated in the PN sequences and can be numbered 0 through 113. A relay station attempting to enter the network, or roaming throughout the network (if the relay station is a mobile relay station), may not be allowed to detect PN sequences transmitted by two base station entities using the same cell ID. If the relay station detects an identical cell ID, it will not be able to complete the network entry or re-entry procedure. This is provided as an example of an OFDMA network under the 802.16 standard. However, the various embodiments of the present invention are not limited to preamble modulation codes that are PN sequences, and can include any number of preamble modulation codes, which can be represented by any number of cell ID's numbered in any manner.

In order for a distinction to be made between a base station and a relay station, these 114 PN sequences, and their representative cell ID's, must be divided up into at least two groups, with one group indicating that codes assigned to the group are for base stations in the network and a different one of the groups indicating that codes assigned to the group are for relay stations in the network. This re-organization and assignment should not attract any break in the backwards compatibility with other 802.16 networks, thereby making it transparent for any 802.16 OFDMA mobile station. The various embodiments of the present invention are not limited to preamble modulation codes that are assigned into two groups, and can include any number of groups larger than two indicating that codes assigned to each respective group are for any type of entity within the network.

From operation 10, the process moves to operation 20, where the relay station attempting to enter or re-enter the network receives a signal transmitted from a station in the network, the received signal including a preamble modulation code. As the relay station enters or re-enters the network, its preamble detector will begin to detect preamble modulation codes from other station entities within the network that are within range of the relay station.

From operation 20, the process moves to operation 30, where the relay station determines whether the station that transmitted the received signal is a base station or a relay station based on the group to which the preamble modulation code of the received signal was assigned. At this point, the relay station is able to distinguish between a base station and another relay station due to the re-organization and assignment of the PN sequences, and related cell ID's, which was carried out in operation 10.

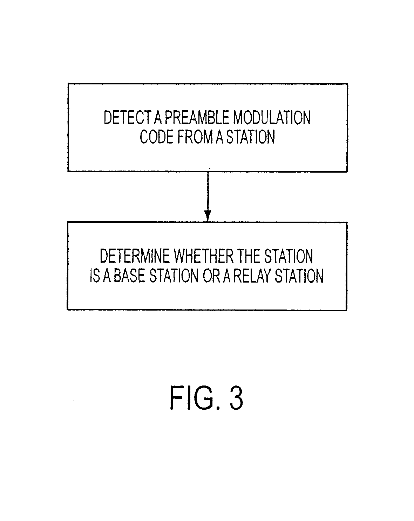

Fig. 3 is a flowchart illustrating a procedure of a relay station attempting to execute a network entry or a hard handover procedure, according to an embodiment of the present invention. Referring now to Fig. 1, in operation 100, a preamble modulation code of a signal transmitted by a station in an OFDMA network is detected. As the relay station enters or re-enters the network, its preamble detector will begin the detect preamble modulation codes, from other station entities within the network that are within range of the relay station.

From operation 100, the process moves to operation 200, where it is determined whether the station is a base station or a relay station based on a group to which the detected preamble modulation code is assigned.

The OFDMA preamble modulation codes can be, for example, Pseudo Noise (PN) sequences and, for example, under the Institute of Electrical and Electronics Engineers (IEEE) 802.16 standard, base stations use 114 distinct PN sequences as preamble modulation codes. Furthermore, these 114 PN sequences are represented by cell ID's, which can be numbered 0 through 113. A relay station attempting to enter the network, or roaming throughout the network (if the relay station is a mobile relay station), may not be allowed to detect preamble modulation codes transmitted by a base station entity using the same cell ID and received within a reasonable received signal strength range. If the relay station detects an identical cell ID, it will not be able to complete the network entry or re-entry procedure. Obviously, this is provided as an example of an OFDMA network under the 802.16 standard. However, the various embodiments of the present invention are not limited to preamble modulation codes that are 114 PN sequences, and can include any number of preamble modulation codes which can be represented by any number of cell ID's numbered in any manner.

Therefore, in order for a distinction to be made between a base station and a relay station, these 114 PN sequences, and their representative cell ID's, are assigned to one of at least two groups, with one group indicating that PN sequences assigned to the group are for base stations in the network and a different one of the groups indicating that PN sequences assigned to the group are for relay stations in the network and a determination is made based on these assigned groups. The various embodiments of the present invention are not limited to preamble modulation codes that are assigned into two groups, and can include any number of groups larger than two indicating that codes assigned to each respective group are for any type of entity within the network.

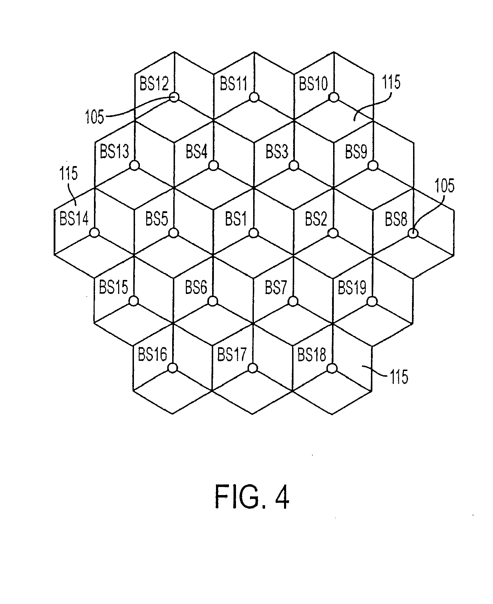

Figs. 4 illustrates an example of a tier 1 +2 wireless network topology for modeling the assignment of preamble modulation codes in an OFDMA network, according to an embodiment of the present invention. In executing this model, it is considered that the minimal distance between two cells using the same ID is 8r, where r is the radius of the cell radius. If the network topology presented in Fig. 4 is a Line-of-Sight (LOS), which is a very conservative case for an urban wireless network, then the related attenuation between two signals received by a given relay station, from two base stations or relay stations using the same cell ID, shall be:

$$\Delta PathLoss = [32.45 + 20\log(f) + 20\log(r)] - [32.45 + 20\log(f) + 20\log(8r)] =$$

$$-20\log(7) = -16.9dB,$$

where f is the frequency (in MHz), d is the distance (in km), and r is the cell radius. Various embodiments of the present invention are not limited to a tier 1+2 wireless network topology as shown in Fig. 4, and can include any wireless network topology. The tier 1+2 wireless network topology as shown in Fig. 4 is provided only as a model for illustrating the attenuation between two signals received by a given relay station.

The equation assumes one user positioned between two cells using the same cell ID, operating on the cell edge. Considering that the preamble modulation code is, for example, based on Binary Phase-Shift Keying (BPSK) modulation, using a repetitive time domain structure, the related correlator that forms the preamble detector requires a low received CINR. Depending on the hardware implementation, the related preamble decoder, receiving two preamble sequences transmitted by two base stations or two relay stations using the same cell ID, deployed in a network topology as presented in Fig. 4, will not process the lower level CINR preamble, due to the estimated large received power level difference between the two. Therefore, the CINR degradation provided by the equation provides a negligible impact upon the operation of the regular preamble detector. This is the reason that a tier 1+2 model, like that shown in Fig. 4, is considered suitable for modeling the process of the present application. Again, the various embodiments of the present invention are not limited to a tier 1+2 wireless network topology as shown in Fig. 4, and can include any wireless network topology. Furthermore, the various embodiments of the present invention are not limited to preamble modulation codes based on BPSK modulation and a preamble detector that requires a low received CINR, and can include any type of preamble code modulation and any compliant preamble detector circuitry.

Considering a three sector per cell network frequency plan, as presented in Fig. 4, the tier 1+2 network uses fifty-seven sectors 115 (three sectors per base station times nineteen base stations 105). The actual structure proposed by the 802.16 standard specifies 114 PN sequences and related cell ID's (numbered 0 through 113). Therefore, the number of remaining PN sequences is presented as:

114 PN Sequences – (57 Sectors * 1 PN Sequence per Sector) = 57 Remaining PN Sequences.

As such, 57 PN sequences, and related cell ID's, are designated for indicating and distinguishing base stations within the network, and the remaining 57 PN sequences, and related cell ID's, can be designated for indicating and distinguishing relay stations within the network. However, the various embodiments of the present invention are not limited to a network frequency plan as shown in the tier 1+2 network of Fig. 4 and are not limited to preamble modulation codes using 114 PN sequences, and can include any number of total preamble modulation codes, base station preamble modulation codes, and relay station preamble modulation codes.

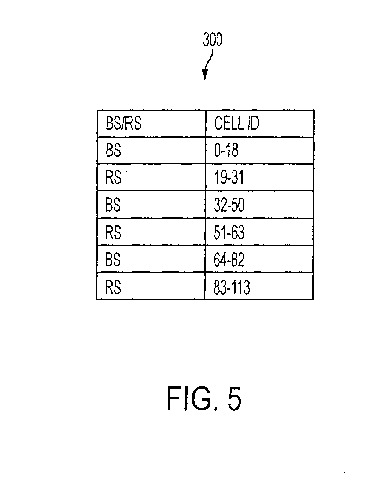

Fig. 5 is chart 300 illustrating the assignment of preamble modulation codes, in this case PN sequences and their relate cell ID's, into groups indicating relation to a base station and groups indicating relation to a relay station, according to an embodiment of the present invention. In this embodiment, Cell ID's 0-18, 32-50, and 64-82 are assigned to groups indicating relation to a base station and Cell ID's 19-31, 51-63, and 83-113 are assigned to groups indicating relation to a relay station. Without changing the original definition of PN sequences defined in 802.16 networks, it is possible to re-assign the PN sequences in this manner. It should be appreciated that Fig. 5 is illustrative of only a single example of a assignment of PN sequences, and their related Cell ID's, and that the assignment could be programmed in any like manner by the service provider of the 802.16 network. Furthermore, the various embodiments of the present invention are not limited to preamble modulation codes in an 802.16 network using 114 PN sequences, and can include any wireless communication network using any number of preamble modulation codes, which can be represented by any number of cell ID's numbered in any manner.

The present invention relates to relay stations acting in OFDMA networks, and in particular, 802.16 networks. However, the present invention is not limited to any specific types of networks, and the method and apparatus of the relay station could be applied in various different types of wireless communications networks.

Although a few preferred embodiments of the present invention have been shown and described, it would be appreciated by those skilled in the art that changes may be made in these embodiments without departing from the principles and spirit of the invention, the scope of which is defined in the claims and their equivalents.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

## Claims

1. A method comprising:

   assigning preamble modulation codes employed in an Orthogonal Frequency Division Multiple Access (OFDMA) network to one of at least two groups, one of the groups indicating that codes assigned to the group are for base stations in the network and a different one of the groups indicating that codes assigned to the group are for relay stations in the network;
   receiving a signal transmitted from a station in the network, the received signal including a preamble modulation code; and
   determining whether the station that transmitted the received signal is a base station or a relay station based on the group to which the preamble modulation code of the received signal was assigned.

2. A method comprising:

   detecting a preamble modulation code of a signal transmitted by a station in an Orthogonal Frequency Division Multiple Access (OFDMA) network; and
   determining whether the station is a base station or a relay station based on a group to which the detected preamble modulation code is assigned.

3. The method of claim 1 or 2, wherein the group assignment is modulated in the preamble modulation code.

4. The method of any of the preceding claims, wherein the detecting and determining are performed by a relay station attempting to enter or re-enter the network.

5. The method of any of the preceding claims, wherein the preamble modulation code is a pseudo noise (PN) sequence.

6. The method of any of the preceding claims, wherein the OFDMA network is a network under the Institute of Electrical and Electronics Engineers (IEEE) 802.16 standard.

7. The method of claim 6, wherein the network is modeled as a Tier 1 plus Tier 2 network including a total of 19 base stations representing 57 sectors, each sector being represented by a distinct PN sequence from an associated base station.

8. The method of claim 7, wherein:

   specific PN sequences are assigned to a group indicating assignment to a base station in the network; and
   PN sequences other than the specific PN sequences are assigned to a group indicating assignment to a relay station in the network.

9. A relay station comprising:

means for detecting a preamble modulation code of a signal transmitted by a station in an Orthogonal Frequency Division Multiple Access (OFDMA) network; and

means for determining whether the station is a base station or a relay station based on a group to which the detected preamble modulation code was assigned.

**10.** The relay station of claim 9, wherein the preamble modulation code is a pseudo noise (PN) sequence.

**11.** A computer program, which when executed on a computing device, carried out the method of any of the preceding claims.

FIG. 1

ASSIGN PREAMBLE MODULATION
CODES TO GROUPS

RECEIVE A SIGNAL TRANSMITTED
FROM A STATION

DETERMINE WHETHER THE STATION
IS A BASE STATION OR RELAY STATION

FIG. 2

DETECT A PREAMBLE MODULATION
CODE FROM A STATION

DETERMINE WHETHER THE STATION
IS A BASE STATION OR A RELAY STATION

FIG. 3

FIG. 4

300

| BS/RS | CELL ID |
|-------|---------|
| BS | 0-18 |
| RS | 19-31 |
| BS | 32-50 |
| RS | 51-63 |
| BS | 64-82 |
| RS | 83-113 |

FIG. 5

**EP 1 919 234 A2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 60856040 A